# EUROPÄISCHE PATENTSCHRIFT

(11) **EP 1 481 825 B1**
(45) Veröffentlichungstag und Bekanntmachung des Hinweises auf die Patenterteilung: **14.02.2007**
(21) Anmeldenummer: 03291283.4
(22) Anmeldetag: 27.05.2003
(51) Int. Cl.: B60H 1/00

(54) **Klimaanlage**
Air conditioning system
Dispositif de climatisation

(43) Veröffentlichungstag der Anmeldung: 01.12.2004
(73) Patentinhaber: Behr France Rouffach SAS, 68250 Rouffach (FR)
(72) Erfinder: Martischang, Paul, 68250 Pfaffenheim (DE)
(74) Vertreter: Grauel, Andreas

(56) Entgegenhaltungen:
- DE-A- 2 210 212
- DE-A- 10 101 551
- DE-B- 1 780 075

## Beschreibung

Die Erfindung betrifft eine Klimaanlage, insbesondere für ein Kraftfahrzeug, gemäß dem Oberbegriff des Anspruchs 1 und wie in DE 10101551 offenbart.

Es sind eine Vielzahl von Maßnahmen bekannt, um das sogenannte "Flashfogging", das heißt ein blitzartiges Beschlagen der Windschutzscheibe in Folge hoher Luftfeuchtigkeit, die sich an den kalten Scheiben niederschlägt, zu verhindern. Diese Maßnahmen sind jedoch in aller Regel recht aufwändig und kostspielig.

Es ist Aufgabe der Erfindung, eine verbesserte Klimaanlage zur Verfügung zu stellen.

Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist eine Klimaanlage mit einem Verdampfer und einem Heizkörper, die in einem Luftführungsgehäuse angeordnet sind, derart ausgebildet, dass Lüftkanäle vorgesehen sind, die direkt vom Verdampfer aus kalte Luft und/oder direkt vom Heizkörper aus warme Luft zu einem Ausströmer leiten, wobei die Luftkanäle über einen Teil ihrer Länge getrennt ausgebildet sind, so dass in diesem Bereich keine Mischung von kalter und warmer Luft erfolgt. Dadurch, dass die Luft jeweils nur den Verdampfer oder den Heizkörper durchströmt, wird das Risiko eines"Flash foggings" auf einfache Weise verringert oder ganz verhindert.

Bevorzugt sind die Luftkanäle für kalte und warme Luft getrennt ausgebildet, wobei die Luftkanäle im Wesentlichen, das heißt über einen größeren Teil ihrer Länge, parallel zueinander verlaufen und bis zu einer Verteiler-/Mischeinheit durch eine Wand getrennt sind.

Vorzugsweise sind der Verdampfer und der Heizkörper relativ schmal und lang ausgebildet. Dies ermöglicht eine optimale Luftverteilung auf die einzelnen Luftkanäle. Der kalte und der warme Luftkanäle für einen Ausströmer können bevorzugt auf einer Höhe angeordnet sein.

Zur Einstellung der Luftmenge und Lufttemperatur für jedes Paar von Luftkanälen für warme und kalte Luft dient ein Ausströmer, wobei hierfür eine Klappe oder Düse vorgesehen sein kann.

Bevorzugt sind zwei parallel zueinander verlaufende Luftkanäle kreisförmig ausgebildet, wobei eine Wand mittig bis zu einer Verteiler-/Mischeinheit verläuft.

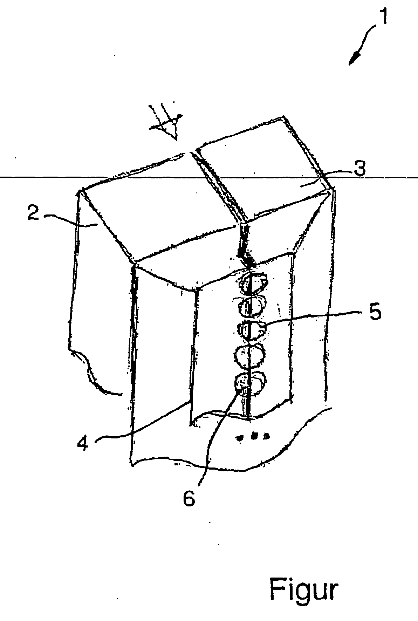

Im Folgenden wird die Erfindung anhand eines Ausführungsbeispiels unter Bezugnahme auf die Zeichnung im Einzelnen erläutert. Die einzige Figur der Zeichnung zeigt eine vereinfachte Ansicht einer Klimaanlage 1 mit einem Verdampfer 2 und einem Heizkörper 3, die in einem Luftführungsgehäuse 4 angeordnet sind, sowie schematisch dargestellten Luftkanälen 5, durch welche kalte und warme Luft dem Fahrzeuginnenraum zugeführt wird.

Wie der Figur zu entnehmen ist, sind der Verdampfer 2 und der Heizkörper 3 relativ lang und schmal ausgebildet und parallel nebeneinander angeordnet. Die Luftkanäle 5 sind nach dem Verdampfer 2 und dem Heizkörper 3 für kalt und warm getrennt durch eine Wand 6 bis zu einer Verteiler-/Mischeinheit ausgebildet. So kann die Lufttemperatur und Luftmenge individuell für jeden Ausströmer durch eine Klappe (nicht dargestellt) geregelt werden. Die Mischung von kalter und warmer Luft erfolgt in jedem Luftkanal 5 nach der Verteiler-/Mischeinheit und vor einem diesem Luftkanal 5 zugeordneten Ausströmer für jeden Ausströmer getrennt.

Dadurch, dass der Verdampfer 2 nicht beaufschlagt wird, tritt das Problem des sogenannten"Flash-foggings" wegen der bis zur Verteiler-/Mischeinheit getrennt ausgebildeten Luftkanäle 5 nicht auf.

### Bezugszeichenliste

- 1: Klimaanlage
- 2: Verdampfer
- 3: Heizkörper
- 4: Luftführungsgehäuse
- 5: Luftkanal
- 6: Wand

## Patentansprüche

1. Klimaanlage mit einem Verdampfer (2) und einem Heizkörper (3), die in einem Luftführungsgehäuse (4) angeordnet sind, mit Luftkanälen (5), die direkt vom Verdampfer (2) aus kalte Luft und/oder direkt vom Heizkörper (3) aus warme Luft zu einem Ausströmer leiten, **dadurch gekennzeichnet, dass** der Verdampfer (2) und der Heizkörper (3) benachbart und im Wesentlichen parallel zueinander im Luftführungsgehäuse (4) angeordnet und die Luftkanäle (5) in einem Bereich, in dem Verdampfer (2) und Heizkörper (3) sich am nächsten sind, aus dem Luftführungsgehäuse (4) geführt sind.

2. Klimaanlage nach Anspruch 1, **dadurch gekennzeichnet, dass** die Luftkanäle (5) für kalte und warme Luft getrennt ausgebildet sind, wobei die Luftkanäle (5) im Wesentlichen parallel zueinander verlaufen und bis zu einer Verteiler-/Mischeinheit durch eine Wand (6) getrennt sind.

3. Klimaanlage nach Anspruch 1 oder 2, **dadurch gekennzeichnet, dass** der Verdampfer (2) und der Heizkörper (3) relativ schmal und lang ausgebildet sind.

4. Klimaanlage nach einem der vorhergehenden Ansprüche, **dadurch gekennzeichnet, dass** zur Einstellung der Luftmenge und Lufttemperatur für jedes Paar von Luftkanälen (5) für warme und kalte Luft ein Ausströmer dient.

5. Klimaanlage nach einem der vorhergehenden Ansprüche, **dadurch gekennzeichnet, dass** zwei parallel zueinander verlaufende Luftkanäle (5) kreisförmig ausgebildet sind, wobei eine Wand (6) mittig verläuft.

## Claims

1. An air conditioning system having an evaporator (2) and a heating element (3) which are positioned in an air guiding housing (4) with air ducts (5) which conduct cold air directly from the evaporator (2) and/or hot air directly from the heating element (3) to an air outlet,
**characterised in that**
the evaporator (2) and the heating element (3) are positioned adjacent and essentially parallel to one another in the air guiding housing (4), and the air ducts (5) lead out of the air guiding housing (4) in an area in which the evaporator (2) and the heating element (3) are closest.

2. An air conditioning system in accordance with claim 1,
**characterised in that**
the air ducts (5) for cold and warm air are configured separately, said air ducts (5) running essentially parallel to one another and being separated as far as a distributor/mixing unit by a wall (6).

3. An air conditioning system in accordance with claim 1 or 2,
**characterised in that**
with the evaporator (2) and the heating element (3) are relatively narrow and long.

4. An air conditioning system in accordance with one of the preceding claims,
**characterised in that**
an air outlet serves to adjust the air volume and the air temperature for each pair of air ducts (5) for warm and cold air.

5. An air conditioning system in accordance with one of the preceding claims,
**characterised in that**
two parallel running air ducts (5) are circular in shape with a wall (6) running through the centre.

## Revendications

1. Installation de climatisation comprenant un évaporateur (2) et un corps de chauffage (3), qui sont disposés dans un boîtier de guidage d'air (4), des conduits d'air (5), qui conduisent directement à partir de l'évaporateur (2) de l'air froid et/ou directement à partir du corps de chauffage (3) de l'air chaud vers un dispositif d'évacuation, **caractérisée en ce que** l'évaporateur (2) et le corps de chauffage (3) sont disposés à proximité et sensiblement parallèlement entre eux dans le carter de guidage d'air (4) et les conduits d'air (5) qui sont guidés à la sortie du carter de guidage d'air (4) dans une zone dans laquelle l'évaporateur (2) et le corps de chauffage (3) sont les plus rapprochés.

2. Installation de climatisation selon la revendication 1, **caractérisée en ce que** les conduits d'air (5) sont réalisés séparément pour l'air froid et l'air chaud, les conduits d'air (5) étant agencés sensiblement parallèlement entre eux et étant séparés par une paroi (6) jusqu'à une unité de répartition et de mélange.

3. Installation de climatisation selon la revendication 1 ou 2, **caractérisée en ce que** l'évaporateur (2) et le corps de chauffage (3) sont réalisés relativement étroits et longs.

4. Installation de climatisation selon l'une quelconque des revendications précédentes, **caractérisée en ce qu'**un dispositif d'évacuation sert au réglage de la quantité d'air et de la température de l'air pour chaque paire de conduits d'air (5) pour l'air chaud et pour l'air froid.

5. Installation de climatisation selon l'une quelconque des revendications précédentes, **caractérisée en ce que** deux conduits d'air (5) agencés parallèlement entre eux sont réalisés avec une forme circulaire, une paroi (6) étant agencée au centre.s
